# EUROPÄISCHE PATENTANMELDUNG

(11) **EP 4 851 613 A1**
(43) Veröffentlichungstag der Anmeldung: **09.12.2026**
(21) Anmeldenummer: 26180312.6
(22) Anmeldetag: 21.05.2026
(51) Int. Cl.: G01N 23/20016, G01N 23/207

(54) **GONIOMETER FÜR MESSAPPARATUR SOWIE MESSAPPARATUR**

(30) Priorität: 02.06.2025 AT 503852025
(71) Anmelder: Anton Paar GmbH, 8054 Graz (AT)
(72) Erfinder: Gautsch, Josef, 8044 Graz (AT)
(74) Vertreter: Dilg, Haeusler, Schindelmann Patentanwaltsgesellschaft mbH

(57) **Zusammenfassung**

Bereitgestellt ist ein Goniometer (2) für eine Messapparatur (1), insbesondere Röntgenstreumessapparatur, aufweisend: eine Basiseinheit (11); einen ersten Goniometerarm (12a) und einen zweiten Goniometerarm (12b); eine Rotationsantriebseinheit (13), die ein Gehäuse (14) und eine Abtriebswelle (15) mit Abtriebswellenachse (9) aufweist, wobei das Gehäuse (14) der Rotationsantriebseinheit (13) um eine Rotationsantriebseinheitslagerachse (10), die im Wesentlichen parallel und insbesondere im Wesentlichen entlang der Abtriebswellenachse (9) ausgerichtet ist, drehbar relativ zu der Basiseinheit (11) gelagert ist; wobei der erste Goniometerarm (12a) an dem Gehäuse (14) der Rotationsantriebseinheit (13) befestigt ist, wobei durch Aktivieren der Rotationsantriebseinheit (13) der erste Goniometerarm (12a) um die Rotationsantriebseinheitslagerachse (10) verdreht wird, wobei der zweite Goniometerarm (12a) an der Abtriebswelle (15) der Rotationsantriebseinheit (13) befestigt ist, wobei durch Aktivieren der Rotationsantriebseinheit (13) der zweite Goniometerarm (12b) um die Abtriebswellenachse (9) und/oder die Rotationsantriebseinheitslagerachse (10) verdreht wird.

## Beschreibung

### Technisches Gebiet

Die vorliegende Erfindung betrifft ein Goniometer für eine Messapparatur, insbesondere Röntgenstreumessapparatur, betrifft ferner eine Messapparatur und betrifft ferner ein Verfahren eines Herstellens eines Goniometers für eine Messapparatur. Insbesondere ist ein Theta-Theta-Goniometer für ein Röntgendiffraktometer bereitgestellt.

### Hintergrund der Erfindung

US 7,852,983 B2 offenbart ein Röntgendiffraktometer für mechanisch korrelierte Bewegung von Quelle, Detektor und Probenposition. Dabei wird eine Linearbewegung in eine Drehbewegung von Goniometerarmen übersetzt.

Es ist beobachtet worden, dass herkömmliche Goniometer keine befriedigende Winkelgenauigkeit zur Einstellung der Verschwenkung von Goniometerarmen aufweisen. Ferner wurde beobachtet, dass herkömmliche Goniometer einen komplizierten und aufwendigen Aufbau aufweisen.

Es ist somit eine Aufgabe der vorliegenden Erfindung, ein Goniometer für eine Messapparatur, eine Messapparatur beziehungsweise ein Herstellungsverfahren für eine Messapparatur beziehungsweise für ein Goniometer bereitzustellen, wobei ein einfacher Aufbau möglichst geringer Komplexität bereitgestellt ist und eine Genauigkeit eines einstellbaren Winkels verbessert werden kann.

### Zusammenfassung der Erfindung

Die Aufgabe wird durch die Gegenstände der unabhängigen Ansprüche gelöst. Die abhängigen Ansprüche spezifizieren besondere Ausführungsformen der vorliegenden Erfindung.

Gemäß einer Ausführungsform der vorliegenden Erfindung ist ein Goniometer für eine Messapparatur bereitgestellt, insbesondere Röntgenstreumessapparatur, aufweisend: eine Basiseinheit; einen ersten Goniometerarm und einen zweiten Goniometerarm; eine Rotationsantriebseinheit, die ein Gehäuse und eine Abtriebswelle mit Abtriebswellenachse aufweist, wobei das Gehäuse der Rotationsantriebseinheit um eine Rotationsantriebseinheitslagerachse, die im Wesentlichen parallel und insbesondere im Wesentlichen entlang der Abtriebswellenachse ausgerichtet ist, drehbar relativ zu der Basiseinheit gelagert ist; wobei der erste Goniometerarm an dem Gehäuse der Rotationsantriebseinheit befestigt ist, wobei durch Aktivieren der Rotationsantriebseinheit der erste Goniometerarm um die Rotationsantriebseinheitslagerachse verdreht wird, wobei der zweite Goniometerarm an der Abtriebswelle der Rotationsantriebseinheit befestigt ist, wobei durch Aktivieren der Rotationsantriebseinheit der zweite Goniometerarm um die Abtriebswellenachse und/oder die Rotationsantriebseinheitslagerachse verdreht wird.

Das Goniometer kann zur Verwendung in verschiedenen Messapparaturen ausgebildet sein, zum Beispiel Messapparaturen, die eine Strahlungsquelle sowie einen Strahlungsdetektor aufweisen, wobei die Strahlung zum Beispiel elektromagnetische Strahlung oder Teilchenstrahlung umfassen kann. Die Strahlung kann Strahlung im sichtbaren Wellenlängenbereich sein, Strahlung im Infrarotwellenbereich, Strahlung im ultravioletten Bereich und/oder im Röntgenbereich umfassen. Teilchenstrahlen können zum Beispiel Elektronenstrahlen, Neutronenstrahlen umfassen.

Das Goniometer kann insbesondere als ein Theta-Theta-Goniometer ausgebildet sein, bei dem (gleichzeitig) eine Verdrehung des ersten Arms und eine gegensinnige Verdrehung des zweiten Arms um einen gleichen Winkelbetrag erfolgt.

Die Basiseinheit kann als ein Rahmen oder eine Montageeinheit aufgefasst werden, an der die weiteren Komponenten montiert, gelagert und/oder geführt werden.

Der erste Goniometerarm und der zweite Goniometerarm können im Wesentlichen eine geradlinige Form entlang einer jeweiligen Längsachse aufweisen und können ausgebildet sein, eine Strahlungsquelle beziehungsweise einen Strahlungsdetektor zu haltern, wofür sie zum Beispiel Montagebereiche aufweisen können.

Die Rotationsantriebseinheit kann aus einer oder mehreren miteinander gekoppelten Komponenten ausgeführt sein beziehungsweise diese umfassen, zum Beispiel zumindest einen Elektromotor, der optional mit einem oder mit mehreren Getriebestufen gekoppelt sein kann. Die Abtriebswelle der Rotationsantriebseinheit kann sich relativ zu dem Gehäuse verdrehen, und zwar um die Abtriebswellenachse. Die Abtriebswelle kann sich bei Aktivierung der Rotationsantriebseinheit relativ zu dem Gehäuse um die Abtriebswellenachse um einen definierten Winkel oder auf eine definierte Winkelposition verdrehen, was durch entsprechende Antriebssteuersignale veranlasst werden kann. Das Gehäuse ist um die Rotationsantriebseinheitslagerachse relativ zu der Basiseinheit drehbar. Das Gehäuse kann mittels eines Lagers gelagert sein, was entweder zum Beispiel auf einem Schlitten vorgesehen ist, der relativ zur Basiseinheit für eine lineare Verschiebung gelagert ist, oder kann mittels eines Lagers gelagert sein, was an der Basiseinheit montiert beziehungsweise vorgesehen ist. Im Idealfall ist die Abtriebswellenachse genau entlang (d.h. koaxial mit) der Rotationsantriebseinheitslagerachse ausgerichtet. Im Folgenden wird mit Goniometerachse eine Achse bezeichnet, welche koaxial sowohl mit der Rotationsantriebseinheitslagerachse als auch mit der Abtriebswellenachse ist.

Das Goniometer weist eine oder mehrere Komponenten auf, die eine mechanische Kopplung zwischen erstem und zweitem Goniometerarm bewirken.

Aufgrund der mechanischen Kopplung bewirkt eine Verschwenkung eines Goniometerarm, z.B. des ersten Goniometerarms, eine Verschwenkung des anderen Goniometerarms, z.B. des zweiten Goniometerarms.

Da der zweite Goniometerarm an der Abtriebswelle der Rotationsantriebseinheit befestigt ist, wird der zweite Goniometerarm um die Abtriebswellenachse verdreht, wenn die Rotationsantriebseinheit aktiviert wird. Da jedoch auch die Rotationsantriebseinheit drehbar um die Rotationsantriebseinheitslagerachse gelagert ist, der erste Goniometerarm an dem Gehäuse der Rotationseinheit befestigt ist (das heißt sich mit dem Gehäuse mitdreht) und die mechanische Kopplung zwischen erstem und zweitem Goniometerarm vorliegt, wird auch der zweite Goniometerarm (gleichzeitig) um die Rotationsantriebseinheitslagerachse verdreht, wenn die Rotationsantriebseinheit aktiviert wird.

Ursächlich für eine Verdrehung sowohl des ersten Goniometerarms als auch des zweiten Goniometerarms ist (ausschließlich) die Aktivierung der Rotationsantriebseinheit, das heißt die Erzeugung eines Drehmoments an der Abtriebswellenachse der Rotationsantriebseinheit, sowie die erwähnte Kopplung zwischen den Armen. Dieses Drehmoment führt sodann sowohl zu einer Verdrehung der Abtriebswellenachse als auch zu einer Verdrehung des Gehäuses der Rotationsantriebseinheit, so dass beide Goniometerarme verdreht werden, insbesondere um einen jeweils entgegengesetzten Winkelbetrag, der jedoch der Größe nach gleich ist. Das Goniometer kann eine hohe Genauigkeit einer Einstellbarkeit eines gewünschten Winkels aufweisen, wozu insbesondere eine geeignete Elektromotor-Getriebekombination für die Rotationsantriebseinheit gewählt werden kann.

Gemäß einer Ausführungsform der vorliegenden Erfindung ist das Goniometer derart ausgebildet, dass durch Aktivieren der Rotationsantriebseinheit der erste Goniometerarm relativ zur Basiseinheit um einen ersten Winkel verdreht wird, wobei durch Aktivieren der Rotationsantriebseinheit der zweite Goniometerarm relativ zur Basiseinheit um einen zweiten Winkel verdreht wird, der das Negative des ersten Winkels beträgt, wobei insbesondere bei Verdrehen der Abtriebswelle der Rotationsantriebseinheit um ein erstes Winkelinkrement eine gegensinnige Verdrehung des ersten Goniometerarms und des zweiten Goniometerarms um ein zweites Winkelinkrement erfolgt, das der Größe nach proportional zum, insbesondere die Hälfte des, ersten Winkelinkrement ist, wobei ferner insbesondere ein Proportionalitätsfaktor über einen gesamten erstellbaren Verdrehungsbereich des ersten und zweiten Goniometerarms konstant ist.

Somit kann ein sogenanntes Theta-Theta-Goniometer bereitgestellt werden, was insbesondere für typische Messverfahren für Strahlungsmessapparaturen vorteilhaft zum Einsatz kommen kann. Dabei kann zum Beispiel ein Strahlungsquellenarm gegensinnig zu einem Strahlungsdetektorarm um einen gleichen Winkelbetrag verschwenkt werden. Die Verschwenkung sowohl des ersten Goniometerarms als auch des zweiten Goniometerarms (in gegensinniger Weise) ist dabei proportional zu einem Verdrehungswinkel der Abtriebswellenachse der Rotationsantriebseinheit relativ zu dem Gehäuse der Rotationsantriebseinheit. Die Proportionalität liegt mit konstantem Proportionalitätsfaktor über dem gesamten Winkelbereich (z.B. 150° bis 50° oder 180° bis 30°, oder 165° bis 0°) einer relativen Verdrehung der beiden Goniometerarme vor, was eine Einstellung eines gewünschten Winkels mit hoher Genauigkeit erlauben kann.

Gemäß einer Ausführungsform der vorliegenden Erfindung weist das Goniometer ferner einen ersten Haltearm auf, der bei einem Basisverbindungbereich um eine erste Haltearmlagerachse drehbar relativ zu der Basiseinheit gelagert ist und bei einem Goniometerarmverbindungsbereich um eine Drehhalteachse des ersten Goniometerarms drehbar an dem ersten Goniometerarm gelagert ist; ferner einen zweiten Haltearm, der bei einem Basisverbindungbereich um eine zweite Haltearmlagerachse, insbesondere parallel zur ersten Haltearmlagerachse, drehbar relativ zu der Basiseinheit gelagert ist und bei einem Goniometerarmverbindungsbereich um eine Drehhalteachse des zweiten Goniometerarms, insbesondere parallel zur Drehhalteachse des ersten Goniometerarms, drehbar an dem zweiten Goniometerarm gelagert ist.

Durch die Haltearme und deren Verbindung bzw. Lagerung kann die Kopplung zwischen erstem und zweitem Goniometerarm (mit)bewirkt werden.

Wenn die Rotationsantriebseinheit aktiviert wird, so dass daher ein Drehmoment auf die Abtriebswelle wirkt, kann dadurch eine Verschiebung zumindest einer Komponente des Goniometers verursacht werden, insbesondere eine lineare Verschiebung. Zum Beispiel kann die Rotationsantriebseinheit aufgrund des auf die Abtriebswelle wirkenden oder von der Rotationsantriebseinheit erzeugten Drehmoments entlang einer linearen Richtung verschoben werden. In anderen Ausführungsformen kann die Rotationsantriebseinheit ihre Position auch bei Aktivieren der Rotationsantriebseinheit (relativ zu der Basiseinheit) beibehalten, jedoch eine oder mehrere Komponenten (zum Beispiel Lager, die Haltearme lagern) können linear verschoben werden.

Der erste/zweite Haltearm kann somit mit dem ersten/zweiten Goniometerarm verbunden sein, um den Goniometerarm jeweils zu haltern und zu einer symmetrischen gegensinnigen Verdrehung zu führen, sobald die Rotationsantriebseinheit aktiviert wird.

Zur Lagerung verschiedener Komponenten können entsprechende Lager, etwa Rollenlager, Gleitlager, Zylinderrollenlager oder eine Kombination davon vorgesehen sein, die insbesondere im Wesentlichen spielfrei zu lagern ausgebildet sein können. Im Idealfall können alle Lagerachsen parallel zueinander ausgerichtet sein.

Durch das Vorsehen der Haltearme und ihrer Verbindungen zu den Goniometerarmen kann auch ein vorteilhaftes, zumindest teilweises Austarieren der auf die Komponenten, insbesondere die Rotationsantriebseinheit, wirkenden Kräfte beziehungsweise Drehmomente bewirkt werden, so dass zum Beispiel ein bei einem eingestellten Winkel von der Rotationsantriebseinheit aufzunehmendes Drehmoment relativ gering sein kann.

Im Folgenden werden Ausführungsformen in größerem Detail beschrieben, bei denen die Rotationsantriebseinheit bei Aktivieren derselben linear verschoben wird.

Gemäß einer Ausführungsform der vorliegenden Erfindung ist das Goniometer derart ausgebildet, dass die Rotationsantriebseinheit in einer Richtung geradlinig verschiebbar relativ zu der Basiseinheit gelagert ist, wobei bei Aktivieren der Rotationsantriebseinheit eine Ausrichtung der Abtriebswellenachse als auch der Rotationsantriebseinheitslagerachse unverändert bleibt, und/oder wobei bei Aktivieren der Rotationsantriebseinheit eine Verschiebung der Position der Abtriebswellenachse als auch der Position der Rotationsantriebseinheitslagerachse senkrecht zur Abtriebswellenachse und/oder zur Rotationsantriebseinheitslagerachse relativ zur Basiseinheit erfolgt.

Gemäß dieser Ausführungsform bewirkt somit das Erzeugen eines Drehmoments auf der Abtriebswelle der Rotationsantriebseinheit sowohl eine Verdrehung der Abtriebswelle (relativ zum Gehäuse der Rotationsantriebseinheit) als auch eine Verdrehung des Gehäuses relativ zur Basiseinheit und ferner eine lineare oder geradlinige Verschiebung der Rotationsantriebseinheit relativ zu der Basiseinheit. Um diese drei Bewegungen zu bewirken, ist außer der Erzeugung eines Drehmoments auf die Abtriebswelle der Rotationsantriebseinheit kein zusätzlicher Aktivator erforderlich. Dabei können die Positionen der Haltearmlagerachsen relativ zur Basiseinheit auch bei Aktivierung der Rotationsantriebseinheit in ihrer Position unverändert bleiben, um somit auch vorteilhaft große Gewichtsanteile der Goniometerarme aufnehmen und tragen zu können. Eine geradlinige Verschiebung der Position der Abtriebswellenachse als auch der Rotationsantriebseinheitslagerachse kann durch eine oder mehrere Führungsstrukturen, die zum Beispiel an der Basiseinheit vorgesehen sein können, erreicht werden.

Gemäß einer Ausführungsform der vorliegenden Erfindung ist das Goniometer derart ausgebildet, dass bei Aktivieren der Rotationsantriebseinheit eine Ausrichtung und eine Lage sowohl der ersten Haltearmlagerachse als auch der zweiten Haltearmlagerachse unverändert bleiben. In dieser Ausführungsform können zum Beispiel ein erstes und ein zweites Haltearmlager an der Basiseinheit vorgesehen sein, welche auch bei Aktivierung der Rotationsantriebseinheit ihre Lage nicht ändern.

Gemäß einer Ausführungsform der vorliegenden Erfindung weist das Goniometer ferner eine an der Basiseinheit vorgesehene Linearführungsbahn auf und einen Schlitten, der entlang der Linearführungsbahn verschiebbar ist, wobei die Rotationsantriebseinheit auf dem Schlitten relativ zum Schlitten um die Rotationsantriebseinheitslagerachse drehbar gelagert ist.

Die Linearführungsbahn kann zum Beispiel eine Bewegung der Rotationsantriebseinheit nur in einer linearen Richtung erlauben und kann dazu auch entsprechende Lager, zum Beispiel Luftkissenlager oder Rollen- oder Gleitlager, aufweisen, mit dem zum Beispiel der Schlitten gelagert sein kann. Die Linearführungsbahn kann zum Beispiel eine oder mehrere Bewegungsbegrenzungsstrukturen, wie etwa Führungsleiste(n) oder Führungsgleis(e), umfassen, die zum Beispiel einen vorgesehenen Bewegungsweg lateral auf einer Seite oder auf zwei Seiten begrenzen.

Im Folgenden werden Ausführungsformen beschrieben, bei denen bei Aktivieren der Rotationsantriebseinheit Positionen von Haltepunkten der Haltearme verschoben werden.

Gemäß einer Ausführungsform der vorliegenden Erfindung ist das Goniometer derart ausgebildet, dass bei Aktivieren der Rotationsantriebseinheit eine Ausrichtung sowohl der ersten Haltearmlagerachse als auch der zweiten Haltearmlagerachse unverändert bleibt, wobei bei Aktivieren der Rotationsantriebseinheit eine geradlinige Verschiebung der Lage sowohl der ersten Haltearmlagerachse als auch der zweiten Haltearmlagerachse erfolgt.

Die erste/zweite Haltearmlagerachse kann zum Beispiel eine Achse eines Haltearmlagers sein, was relativ zu der Basiseinheit linear verschiebbar konfiguriert sein kann. Eine Verschiebung der Rotationsantriebseinheit muss somit gemäß dieser Ausführungsform bei Aktivieren der Rotationsantriebseinheit nicht bewirkt werden, sie kann eine unveränderte Position beibehalten. Nachteilig kann hierbei jedoch sein, dass auch bei fest eingestelltem Winkel ein relativ hohes Drehmoment auf die Abtriebswelle der Rotationsantriebseinheit wirkt, was somit ein entsprechendes Gegenmoment erfordert, was von der Rotationsantriebseinheit erzeugt werden muss.

Gemäß einer Ausführungsform der vorliegenden Erfindung weist das Goniometer ferner auf: einen ersten und einen zweiten an der Basiseinheit vorgesehenen Linearführungsbahnabschnitt; einen ersten und einen zweiten Schlittenabschnitt, die entlang der Linearführungsbahnabschnitte verschiebbar sind, wobei der erste Haltearm auf dem ersten Schlittenabschnitt relativ zum ersten Schlittenabschnitt um die erste Haltearmlagerachse drehbar gelagert ist, und/oder wobei der zweite Haltearm auf dem zweiten Schlittenabschnitt relativ zum zweiten Schlittenabschnitt um die zweite Haltearmlagerachse drehbar gelagert ist.

Der erste und zweite Linearführungsbahnabschnitt können Teile einer Linearführungsbahn sein, müssen somit nicht unbedingt zwei verschiedene Komponenten betreffen. Je nach Anwendung können zum Beispiel zwei Linearführungsbahnen vorgesehen sein oder auch ein Schlitten, der ausgebildet ist, sowohl den ersten Haltearm als auch den zweiten Haltearm verschiebbar zu halten. In dieser Ausführungsform kann zum Beispiel auf dem ersten Schlittenabschnitt ein erstes Haltearmlager vorgesehen sein, welches den ersten Haltearm drehbar auf dem ersten Schlittenabschnitt lagert. Ein analoges Lager kann für den zweiten Haltearm vorgesehen sein.

Folgende weitere strukturelle Merkmale können sowohl für diejenigen Ausführungsformen vorgesehen sein, bei denen die Rotationsantriebseinheit verschiebbar ist, als auch für diejenigen Ausführungsformen, bei denen eine Verschiebung der Lagen der ersten Haltearmlagerachse als auch der zweiten Haltearmlagerachse erfolgt.

Gemäß Ausführungsformen der vorliegenden Erfindung ist das Goniometer derart ausgebildet, dass bei Aktivieren der Rotationsantriebseinheit eine Ausrichtung sowohl der Drehhalteachse des ersten Goniometerarms als auch der Drehhalteachse des zweiten Goniometerarms unverändert bleiben; und/oder wobei bei Aktivieren der Rotationsantriebseinheit eine Verschiebung der Position sowohl der Drehhalteachse des ersten Goniometerarms als auch der Drehhalteachse des zweiten Goniometerarms senkrecht zur jeweiligen Drehhalteachse erfolgt.

Gemäß Ausführungsformen der vorliegenden Erfindung ist das Goniometer derart ausgebildet, dass die erste Haltearmlagerachse spiegelsymmetrisch zu der zweiten Haltearmlagerachse angeordnet ist, und/oder wobei die Drehhalteachse des ersten Goniometerarms spiegelsymmetrisch zu der Drehhalteachse des zweiten Goniometerarms angeordnet ist, wobei eine Spiegelebene durch die Rotationsantriebseinheitslagerachse und/oder die Abtriebswellenachse verläuft und senkrecht zu einer Ebene ausgerichtet ist, die sowohl durch die erste Haltearmlagerachse als auch durch die zweite Haltearmlagerachse verläuft.

Durch diesen strukturellen Aufbau kann gewährleistet werden, dass eine synchrone, gegensinnige Verdrehung des ersten Goniometerarms und des zweiten Goniometerarms bei Aktivierung der Rotationsantriebseinheit erfolgt. Das Goniometer kann insbesondere derart ausgerichtet oder ausrichtbar sein, dass die Spiegelebene im Wesentlichen vertikal ausgerichtet ist und parallel zu sämtlichen Achsen des Goniometers ausgerichtet ist. Damit kann eine vorteilhafte zumindest teilweise Austarierung (Schwer)Kräfte der Komponenten des Goniometers erreicht werden.

Gemäß einer Ausführungsform der vorliegenden Erfindung ist das Goniometer derart ausgebildet, dass ein Abstand zwischen der ersten Haltearmlagerachse und der Drehhalteachse des ersten Goniometerarms im Wesentlichen gleich einem Abstand zwischen der zweiten Haltearmlagerachse und der Drehhalteachse des zweiten Goniometerarms ist.

Gemäß einer Ausführungsform der vorliegenden Erfindung ist das Goniometer derart ausgebildet, dass ein Abstand zwischen der Rotationsantriebseinheitslagerachse und der Drehhalteachse des ersten Goniometerarms im Wesentlichen gleich einem Abstand zwischen der Abtriebswellenachse und der Drehhalteachse des zweiten Goniometerarms ist. Damit kann ein einfacher Aufbau und auch eine vereinfachte Herstellung ermöglicht werden.

Gemäß einer Ausführungsform der vorliegenden Erfindung ist das Goniometer derart ausgebildet, dass die Rotationsantriebseinheit aufweist: einen Elektromotor, insbesondere Schrittmotor, mit einer Motorabtriebswelle; ein Getriebe mit einer Getriebeantriebswelle, die mit der Motorabtriebswelle gekoppelt ist, und mit einer Getriebeabtriebswelle, die die Abtriebswelle der Rotationsantriebseinheit bildet, wobei ein Übersetzungsverhältnis von Getriebeantriebswelle zu Getriebeabtriebswelle insbesondere zwischen 20:1 und 200:1 beträgt, wobei das Getriebe insbesondere ein Wellgetriebe aufweist. Ein Übersetzungsverhältnis des Getriebes kann je nach Anwendung ausgewählt oder definiert werden.

Ein für das Goniometer verwendbares Wellgetriebe kann folgende Komponenten aufweisen: Wave Generator; Flexspline; Circularspline. Der Wave Generator weist eine elliptische Stahlscheibe im Herzen des Getriebes auf, welche über eine zentrische Nabe als auch ein dünnes, elliptisch verformbares Spezialkugellager verfügt. Der Wave Generator kann mit der Motor(abtriebs)welle verbunden sein. Der Flexspline weist eine verformbare zylindrische Stahlbüchse mit radial um die Außenseite angeordneter Verzahnung auf. Als starrer und zylindrischer Außenring umgibt der Circular Spline sowohl den Wave Generator als auch Flexspline und ist mit einer Innenverzahnung ausgestattet. Dabei besitzt die Außenverzahnung des Flexsplines weniger Zähne als die Innenverzahnung des Circular Splines. Die Differenz der Zähne kann z.B. zwei Zähne betragen. Der Wave Generator kann als Eingangsglied und der Flexspline als Abtriebselement des Wellgetriebes verwendet werden.

Der ellipsenförmige Wave Generator initiiert als angetriebenes Element den Prozess des Wellgetriebes und verformt einleitend den Flexspline. Dieser befindet sich in den gegenüberliegenden Bereichen der großen Ellipsenachse mit dem innenverzahnten Circular Spline im Eingriff. Durch die Rotation des Wave Generators verlagern sich die große Ellipsenachse und somit ebenfalls der Zahneingriffsbereich. Der Flexspline trägt weniger Zähne als der Circular Spline. Bei einer Differenz von zwei Zähnen entsteht nach einer halben Umdrehung des Wave Generators eine Relativbewegung zwischen Flexspline und Circular Spline um einen Zahn. Nach einer vollen Rotation beträgt der Unterschied bereits zwei Zähne.

Merkmale und Vorteile des Wellgetriebes gegenüber anderen, konventionelleren Getriebetypen beruhen maßgeblich auf dem Zusammenspiel seiner einfachen Konstruktion und dem einmaligen Prinzip der elastischen Deformation von Stahlzahnrädern. Wellgetriebe weisen über ihre gesamte Lebensdauer hinweg Spielfreiheit auf und behalten über den gesamten Drehmomentbereich eine hohe Torsionssteifigkeit bei. Kleine Abmessungen und geringes Gewicht sorgen im Vergleich mit herkömmlichen Getriebetypen für den Einsatz in kompakteren und leichteren Anwendungen beziehungsweise Systemen. Eine Erwärmung des Wellgetriebes bewirkt, aufgrund der Konstruktion des Getriebes, keinen Winkelfehler.

Im Innenraum eines Diffraktometers ist mit einer Erwärmung um 15 Kelvin im Vergleich zur Umgebung zu rechnen. Damit kann eine hohe Genauigkeit einer Einstellbarkeit eines Winkels erreicht werden, zum Beispiel eine Genauigkeit von ≤ 0.01°.

Gemäß einer Ausführungsform der vorliegenden Erfindung ist das Goniometer derart ausrichtbar oder ausgerichtet, dass für alle Winkelstellungen: die erste Haltearmlagerachse oberhalb der Drehhalteachse des ersten Goniometerarms angeordnet ist, und/oder die zweite Haltearmlagerachse oberhalb der Drehhalteachse des zweiten Goniometerarms angeordnet ist, und/oder die erste Haltearmlagerachse und/oder die zweite Haltearmlagerachse im Wesentlichen auf einem gleichen Horizontalniveau angeordnet sind, und/oder die Drehhalteachse des ersten Goniometerarms und die Drehhalteachse des zweiten Goniometerarms im Wesentlichen auf einem gleichen Horizontalniveau angeordnet sind, wobei insbesondere eine Genauigkeit eines eingestellten Winkels kleiner als 0,05°, insbesondere kleiner als 0,01° ist. Damit kann ein auf die Abtriebswelle der Rotationsantriebseinheit wirkendes Drehmoment vermindert werden.

Gemäß einer Ausführungsform der vorliegenden Erfindung ist das Goniometer derart ausgebildet, dass die Haltearme ein Gewicht der Goniometerarme derart tragen, dass ein auf die Rotationsantriebseinheit wirkendes Drehmoment zum Halten eines eingestellten Winkels zwischen erstem und zweitem Goniometerarm kleiner als ein Schwellwert ist, der insbesondere zwischen 0,5 Nm und 20 Nm liegt, und/oder wobei eine Ausdehnung von Komponenten des Goniometers, insbesondere als Folge von (Umgebungs-)Temperaturänderung um zwischen 15 °C und 40 °C, höchstens zu einer Änderung eines eingestellten Winkels zwischen erstem und zweitem Goniometerarm führt, der kleiner ist als 0,1° insbesondere kleiner als 0,05° liegt. Im Idealfall führt eine Temperaturänderung lediglich zu einer Längenänderung der Goniometerarme, ohne dabei die Winkeleinstellung zu ändern, sodass im Wesentlichen kein Winkelfehler durch Temperaturänderung entsteht.

Gemäß einer Ausführungsform der vorliegenden Erfindung ist eine Messapparatur zum Vermessen einer Probe bereitgestellt, insbesondere Röntgenstreumessapparatur, aufweisend: ein Goniometer gemäß einer der vorangehenden Ausführungsformen; eine Strahlungsquelle zum Erzeugen von Messstrahlung; einen Strahlungsdetektor zum Detektieren von von der Probe ausgehender sekundärer Strahlung; einen Probenhalter, der angeordnet und ausgebildet ist, eine Probe im Wesentlichen in einem Bereich bei der Abtriebswellenachse und/oder der Rotationsantriebseinheitslagerachse zu haltern, wobei an einem des ersten oder zweiten Goniometerarms die Strahlungsquelle angebracht ist und an einem anderen des ersten oder zweiten Goniometerarms der Strahlungsdetektor angebracht ist, derart, dass die Messstrahlung auf die Probe trifft und die sekundäre Strahlung zumindest teilweise vom Strahlungsdetektor detektiert wird.

Die Messapparatur kann z.B. ausgebildet sein als Röntgendiffraktometer oder Goniophotometer (z.B. zur Messung winkelabhängiger Lichtstärkeverteilung) oder als Spektrometer mit Goniometer (z.B. zur Messung von Emissions- und Absorptionsspektren, Brechungsindex...) oder in anderer Weise.

Gemäß einer Ausführungsform der vorliegenden Erfindung weist die Messapparatur ferner eine Treiberschaltung auf, ausgebildet und verbunden, um Steuersignale an die Rotationsantriebseinheit zu übermitteln, um die Rotationsantriebseinheit zu aktivieren, sodass gegensinnige Verschwenkungen um oder auf einen vorbestimmten Winkel von dem ersten und dem zeiten Goniometerarm durchgeführt werden.

Es sollte verstanden sein, dass Merkmale, welche individuell oder in irgendeiner Kombination für ein Goniometer oder für eine Messapparatur zum Vermessen einer Probe beschrieben, bereitgestellt oder offenbart wurden, auch, individuell oder in irgendeiner Kombination, auf ein Verfahren eines Herstellens eines Goniometers für eine Messapparatur anwendbar sind, gemäß Ausführungsformen der vorliegenden Erfindung und umgekehrt.

Gemäß einer Ausführungsform der vorliegenden Erfindung ist ein Verfahren eines Herstellens eines Goniometers für eine Messapparatur bereitgestellt, insbesondere Röntgenstreumessapparatur, aufweisend: Bereitstellen einer Basiseinheit, eines ersten Goniometerarms und eines zweiten Goniometerarms sowie einer Rotationsantriebseinheit, die ein Gehäuse und eine Abtriebswelle mit Abtriebswellenachse aufweist, Lagern des Gehäuses der Rotationsantriebseinheit um eine Rotationsantriebseinheitslagerachse drehbar relativ zu der Basiseinheit; Befestigen des ersten Goniometerarms an dem Gehäuse der Rotationsantriebseinheit, wobei durch Aktivieren der Rotationsantriebseinheit der erste Goniometerarm um die Rotationsantriebseinheitslagerachse verdreht wird, Befestigen des zweiten Goniometerarms an der Abtriebswelle der Rotationsantriebseinheit, wobei durch Aktivieren der Rotationsantriebseinheit der zweite Goniometerarm um die Abtriebswellenachse und/oder die Rotationsantriebseinheitslagerachse verdreht wird.

Insbesondere kann damit ein Verfahren eines Herstellens eines Goniometers gemäß einer der vorangehend beschriebenen Ausführungsformen bereitgestellt sein.

Weitere Vorteile und Merkmale der vorliegenden Erfindung ergeben sich aus der folgenden beispielhaften Beschreibung einiger Ausführungsformen. Die einzelnen Figuren der Zeichnung dieses Dokuments sind lediglich als schematisch und als nicht maßstabsgetreu anzusehen.

### Kurze Beschreibung der Zeichnung

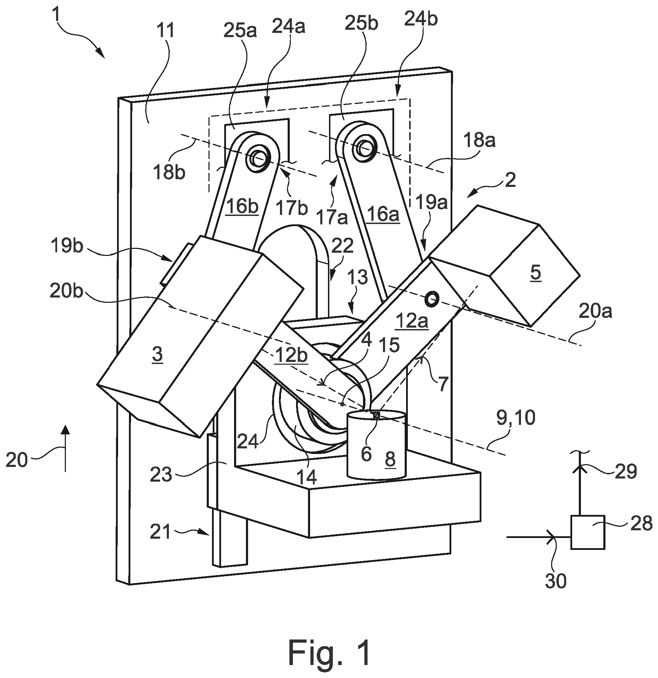

Figuren 1, 2, 3 illustrieren in einer schematischen perspektivischen Ansicht, in einer Frontansicht bzw. in einer Seitenansicht eine Messapparatur gemäß einer Ausführungsform der vorliegenden Erfindung, welche ein Goniometer gemäß einer Ausführungsform der vorliegenden Erfindung aufweist, und zwar in einer ersten Winkelstellung;

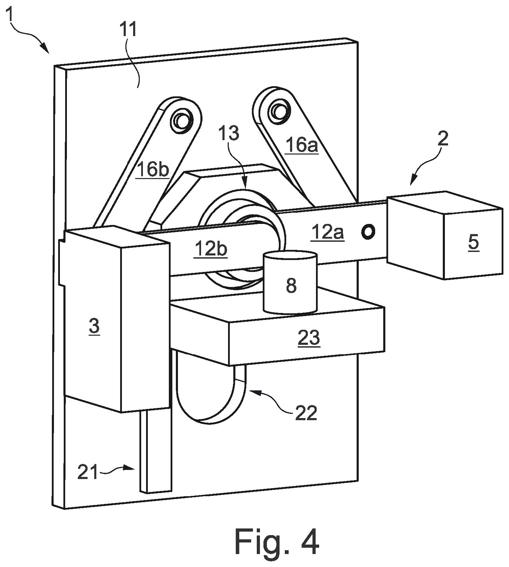

Figuren 4, 5, 6 illustrieren in einer schematischen perspektivischen Ansicht, in einer Frontansicht bzw. in einer Seitenansicht eine Messapparatur gemäß einer Ausführungsform der vorliegenden Erfindung, welche ein Goniometer gemäß einer Ausführungsform der vorliegenden Erfindung aufweist, und zwar in einer zweiten Winkelstellung; und

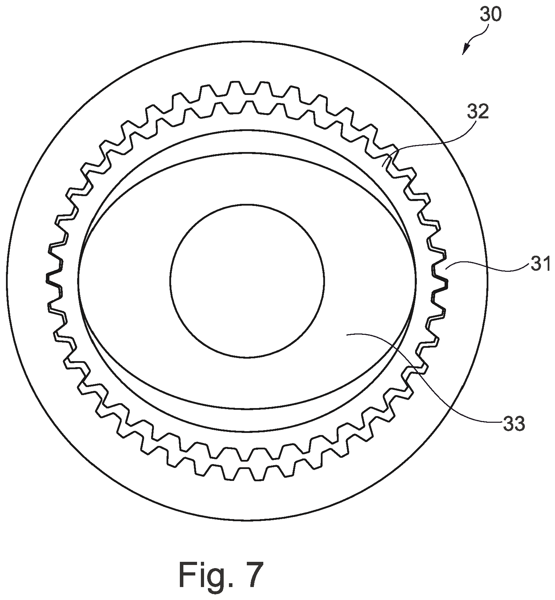

Figur 7 illustriert ein Wellgetriebe, dass in einem Goniometer gemäß einer Ausführungsform der vorliegenden Erfindung verwendet werden kann.

### Detaillierte Beschreibung

Ausführungsformen der vorliegenden Erfindung stellen ein motorisiertes Goniometer bereit, um gleichzeitig und gegensinnig zum Beispiel eine Röntgenquelle und einen Detektor um jeweils den Winkel θ um eine gemeinsame Achse zu drehen. Das Goniometer kann dabei eine spielfreie Motor-Getriebeeinheit aufweisen.

Die schematisch in Figuren 1, 2, 3 in einer perspektivischen, in einer Frontalansicht bzw. in einer Seitenansicht illustrierte Messapparatur 1 gemäß einer Ausführungsform der vorliegenden Erfindung weist ein Goniometer 2 gemäß einer Ausführungsform der vorliegenden Erfindung auf, sowie eine Strahlungsquelle 3 zum Erzeugen von Messstrahlung 4, einen Strahlungsdetektor 5 zum Detektieren von von einer Probe 6 ausgehender sekundärer Strahlung 7 sowie einen Probenhalter 8, der angeordnet und ausgebildet ist, eine Probe 6 im Wesentlichen in einem Bereich bei einer Abtriebswellenachse 9 und/oder einer Rotationsantriebseinheitslagerachse 10 zu haltern.

Das Goniometer 2 gemäß einer Ausführungsform der vorliegenden Erfindung weist dabei eine Basiseinheit 11 auf, an der verschiedene Komponenten gehaltert und/oder gelagert sind. Das Goniometer 2 weist ferner einen ersten Goniometerarm 12a und einen zweiten Goniometerarm 12b auf. Das Goniometer 2 weist ferner eine Rotationsantriebseinheit 13 auf, die ein Gehäuse 14 und eine Abtriebswelle 15 mit Abtriebswellenachse 9 aufweist, wobei das Gehäuse 14 der Rotationsantriebseinheit 13 um eine Rotationsantriebseinheitslagerachse 10, die im Wesentlichen parallel und insbesondere im Wesentlichen entlang der Abtriebswellenachse 9 ausgerichtet ist, drehbar relativ zu der Basiseinheit 11 gelagert ist. Dabei ist der erste Goniometerarm 12a an dem Gehäuse 14 der Rotationsantriebseinheit 13 befestigt, wobei durch Aktivieren der Rotationsantriebseinheit 13 der erste Goniometerarm 12a um die Rotationsantriebseinheitslagerachse 10 verdreht wird. Ferner ist der zweite Goniometerarm 12b an der Abtriebswelle 15 der Rotationsantriebseinheit 13 befestigt, wobei durch Aktivieren der Rotationsantriebseinheit 13 der zweite Goniometerarm 12b um die Abtriebswellenachse 9 und/oder die Rotationsantriebseinheitslagerachse 10 verdreht wird.

In der in den Figuren 1, 2, 3, 4, 5, 6 illustrierten Ausführungsform der Messapparatur 1 ist an dem ersten Goniometerarm 12a der Strahlungsdetektor 5 angebracht und an dem zweiten Goniometerarm 12b ist die Strahlungsquelle 3 angebracht, derart, dass die Messstrahlung 4 auf die Probe 6 trifft und die sekundäre Strahlung 7 zumindest teilweise vom Strahlungsdetektor 5 detektiert wird.

Bei Aktivieren der Rotationsantriebseinheit 13 wird der erste Goniometerarm 12a relativ zur Basiseinheit 11 um einen ersten Winkel verdreht und synchron oder gleichzeitig damit wird der zweite Goniometerarm 12b relativ zur Basiseinheit 11 um einen zweiten Winkel verdreht, der das Negative des ersten Winkels beträgt.

Durch derartiges und synchrones und gegensinniges Verschwenken der Goniometerarme 12a, 12b kann zum Beispiel ausgehend von dem in den Figuren 1, 2, 3 illustrierten Winkelzustand in den Winkelzustand übergegangen werden, der in Figuren 4, 5, 6 illustriert ist. Proportional zur Verdrehung der Abtriebswelle 15 der Rotationsantriebseinheit 13 wird sowohl der erste Goniometerarm 12a als auch der zweite Goniometerarm 12b gegensinnig verdreht.

Durch die Lagerungen der Goniometerarme 12a, 12b zur Verschwenkbarkeit um die Achsen 9, 10 und die Halterungen durch Haltearme 16a, 16b ist eine mechanische Kopplung der Goniometerarme 12a, 12b erreicht, die bei Aktivierung der Rotationsantriebseinheit 13 zu dem gegensinnigen Verschwenken führt. Das Goniometer 2 weist dazu ferner einen ersten Haltearm 16a auf, der bei einem Basisverbindungsbereich 17a um eine erste Haltearmlagerachse 18a drehbar relativ zu der Basiseinheit 11 gelagert ist und bei einem Goniometerarmverbindungsbereich 19a um eine Drehhalteachse 20a des ersten Goniometerarms 12a drehbar an dem ersten Goniometerarm 12a gelagert ist. Das Goniometer weist dazu ferner einen zweiten Haltearm 16b auf, der bei einem Basisverbindungsbereich 17b um eine zweite Haltearmlagerachse 18b, insbesondere parallel zur ersten Haltearmlagerachse 18a, drehbar relativ zu der Basiseinheit 11 gelagert ist und der bei einem Goniometerarmverbindungsbereich (teilweise verdeckt in Figur 1) 19b um eine Drehhalteachse 20b des zweiten Goniometerarms 12b, insbesondere parallel zur Drehhalteachse 20a des ersten Goniometerarms 12a, drehbar an dem zweiten Goniometerarm 12b gelagert ist.

In der in den Figuren dargestellten Ausführungsform ist die Rotationsantriebseinheit 13 verschiebbar ausgeführt. Alternativ oder zusätzlich können die ersten Haltearmlagerachse 18a und die zweite Haltearmlagerachse 18b verschiebbar ausgeführt werden, wie weiter unten kurz beschrieben wird.

Die Rotationsantriebseinheit 13 ist in einer Richtung 20, die zum Beispiel eine vertikale Richtung sein kann, relativ zu der Basiseinheit 11 verschiebbar gelagert. Bei Aktivieren der Rotationsantriebseinheit 13 bleibt eine Ausrichtung der Abtriebswellenachse 9 als auch der Rotationsantriebseinheitslagerachse 10 unverändert, es erfolgt jedoch eine Verschiebung der Position der Abtriebswellenachse 9 als auch der Rotationsantriebseinheitslagerachse 10 senkrecht zur Abtriebswellenachse 9 und/oder zur Rotationsantriebseinheitslagerachse 10, insbesondere entlang der Richtung 20, relativ zu der Basiseinheit 11. In der in Figur 1 illustrierten Ausführungsform bleibt bei Aktivieren der Rotationsantriebseinheit 13 eine Ausrichtung und eine Lage sowohl der ersten Haltearmlagerachse 18a als auch der zweiten Haltearmlagerachse 18b unverändert.

Für die Verschiebung der Rotationsantriebseinheit 13 ist eine an der Basiseinheit 11 vorgesehene Linearführungsbahn 21, 22 vorgesehen, welche zum Beispiel durch mehrere mechanische Strukturen ausgeführt sein kann. Zum Beispiel umfasst die Linearführungsbahn eine Linearführung 21 oder eine Schiene 21 sowie eine Ausnehmung 22, welche eine geradlinige Bewegung der Rotationsantriebseinheit 13 entlang der Richtung 20 ermöglicht beziehungsweise erzwingt, wenn die Rotationsantriebseinheit 13 aktiviert wird. Das Goniometer weist dazu ferner einen Schlitten 23 auf, der entlang der Linearführungsbahn 21, 22 verschiebbar ist. Dabei ist die Rotationsantriebseinheit 13 auf dem Schlitten 23 relativ zum Schlitten um die Rotationsantriebseinheitslagerachse 10 drehbar gelagert. Dazu kann zum Beispiel ein Lager 24 vorgesehen sein, das nur schematisch in den Figuren illustriert ist.

Wie vorher erwähnt, kann alternativ oder zusätzlich zu einer Verschiebbarkeit der Rotationsantriebseinheit 13 eine Verschiebbarkeit der Haltearmlagerachsen 18a, 18b ermöglicht sein, die bei Aktivieren der Rotationsantriebseinheit 13 zwar ihre jeweilige Ausrichtung beibehalten, jedoch eine geradlinige Verschiebung ihrer jeweiligen Lage erfahren. Diese Verschiebung kann analog auch entlang der Richtung 20 erfolgen. Schematisch ist in Figur 1 in gestrichelter Darstellung ein erster Linearführungsabschnitt 24a und ein zweiter Linearführungsabschnitt 24b dargestellt sowie ein erster Schlittenabschnitt 25a und ein zweiter Schlittenabschnitt 25b (in Fig. 1 teilweise weggebrochen dargestellt), entlang derer der erste beziehungsweise der zweite Haltearm 16a, 16b um die erste beziehungsweise zweite Haltearmlagerachse 18a, 18b drehbar gelagert sind. Falls die Verschiebbarkeit der Haltearmlagerachsen 18a, 18b ermöglicht ist, kann die Rotationsantriebseinheit 13 auch bei Aktivieren derselben ihre Position beibehalten oder kann zusätzlich auch eine kleine Verschiebung erfahren.

In jedem Falle kann bei Aktivieren der Rotationsantriebseinheit 13 eine Ausrichtung sowohl der Drehhalteachse 20a des ersten Goniometerarms 12a als auch der Drehhalteachse 20b des zweiten Goniometerarms 12b unverändert bleiben. Ferner erfolgt bei Aktivieren der Rotationsantriebseinheit 13 eine Verschiebung der Position sowohl der Drehhalteachse 20a des ersten Goniometerarms 12a als auch der Drehhalterachse 20b des zweiten Goniometerarms 12b senkrecht zur jeweiligen Drehhalterachse 20a, 20b. Die Verschiebung kann dabei zum Beispiel teilweise entlang der Achse 20, zum Beispiel vertikalen Achse, erfolgen und teilweise senkrecht dazu, zum Beispiel entlang einer horizontalen Achse.

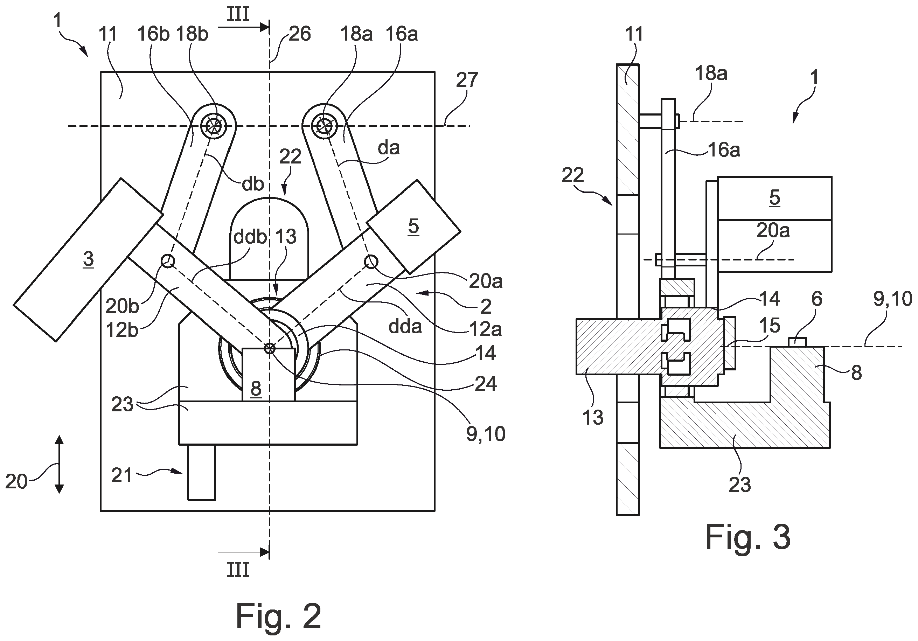

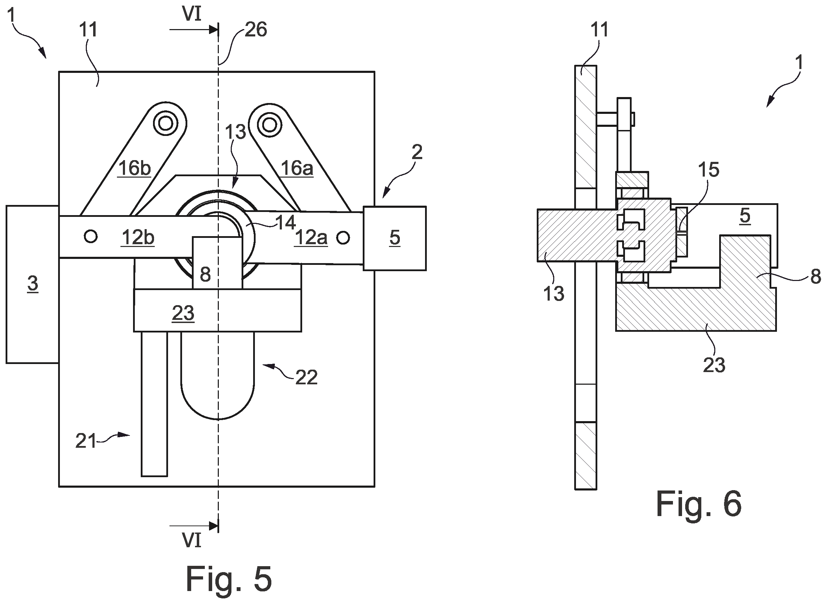

In Figuren 2, 5 ist ferner eine Spiegelebene 26 angedeutet. Die Spiegelebene verläuft durch die Rotationsantriebseinheitslagerachse 10 und/oder durch die Abtriebswellenachse 9 und verläuft senkrecht zu einer Ebene 27, die sowohl durch die erste Haltearmlagerachse 18a als auch durch die zweite Haltearmlagerachse 18b verläuft. Die Spiegelebene 26 entspricht der Schnittebene in Fig. 2, die in Fig. 3 illustriert ist. Die erste Haltearmlagerachse 18a ist spiegelsymmetrisch zu der zweiten Haltearmlagerachse 18b angeordnet und/oder die Drehhalterachse 20a des ersten Goniometerarms 12a ist spiegelsymmetrisch zu der Drehhalterachse 20b des zweiten Goniometerarms 12b angeordnet. Ein Abstand ,da' zwischen der ersten Haltearmlagerachse 18a und der Drehhalterachse 20a des ersten Goniometerarms 12a ist im Wesentlichen oder exakt gleich einem Abstand ,db' zwischen der zweiten Haltearmlagerachse 18b und der Drehhalterachse 20b des zweiten Goniometerarms 12b. Ein Abstand ,dda' zwischen der Rotationsantriebseinheitslagerachse 10 und der Drehhalterachse 20a des ersten Goniometerarms 12a ist im Wesentlichen oder exakt gleich einem Abstand ,ddb' zwischen der Abtriebswellenachse 9 und der Drehhalterachse 20b des zweiten Goniometerarms 12b.

Die Rotationsantriebseinheit 13 kann, wie oben näher beschrieben, mit einem Elektromotor und einem Getriebe ausgestattet werden, was in den Figuren nicht im Detail illustriert ist. Das Goniometer 2 beziehungsweise die gesamte Apparatur 1 kann zum Beispiel in den Figuren 2, 3, 5, 6 derart angeordnet oder ausgerichtet werden, dass die Verschieberichtung 20 im Wesentlichen entlang einer Vertikalen verläuft. Andere Ausrichtungen sind möglich.

Die Messapparatur 1 umfasst ferner eine Treiberschaltung und/oder Steuer- und Auswerteeinheit 28, die ausgebildet und verbunden ist, um Steuersignale 29 an die Rotationsantriebseinheit zu übermitteln, um die Rotationsantriebseinheit 13 zu aktivieren, so dass gegensinnige Verschwenkungen um oder auf einen vorbestimmten Winkel von dem ersten und dem zweiten Goniometerarm 12a, 12b durchgeführt werden. Die Einheit 23 kann ferner Messsignale 30 von dem Detektor 5 erhalten und kann ausgebildet sein, diese Messsignale insbesondere in Kombination mit eingestellten Winkelstellungen zu verarbeiten und auszuwerten.

Ausführungsformen der vorliegenden Erfindung stellen zum Beispiel ein motorisiertes Goniometer (zum Beispiel 2) bereit, um gleichzeitig eine Röntgenquelle (zum Beispiel 3) und einen Detektor (zum Beispiel 5) um jeweils den Winkel θ um eine gemeinsame Achse (zum Beispiel Achse 9 und 10) zu drehen. Das Goniometer 2 kann dabei zum Beispiel eine spielfreie Motor-Getriebeeinheit 13 umfassen. Die Motor-Getriebeeinheit (auch Rotationsantriebseinheit genannt) 13 kann zum Beispiel eine Kombination eines Wellgetriebes (Harmonic Drive) und einer direkt an die Antriebswelle des Getriebes befestigten Abtriebswelle eines Motors umfassen. Diese Kombination kann sich durch eine extrem hohe Winkelauflösung (≤ 0.01°) auszeichnen.

Zum Beispiel kann der Goniometerarm für die Röntgenquelle an der Abtriebswelle des Getriebes befestigt sein. Der Goniometerarm für den Röntgendetektor kann am Gehäuse des Getriebes befestigt sein. Die Anordnung kann auch getauscht sein (das heißt zum Beispiel Röntgendetektor an der Abtriebswelle befestigt).

Die Motor-Getriebeeinheit kann in einem Schlitten (zum Beispiel Schlitten 23 aufweisend) durch ein Lager (zum Beispiel 24) relative zum Schlitten gelagert sein. An den Goniometerarmen befindet sich je ein Gelenkarm (auch Haltearme 16a, 16b genannt). Die Gelenkarme (beziehungsweise Haltearme 16a, 16b) sind an den Goniometerarmen 12a, 12b in einem Lager (zum Beispiel die Achsen 20a, 20b bereitstellend) drehbar und spielfrei gelagert. Die Gelenkarme (zum Beispiel Haltearme 16a, 16b) sind an einer Rückwand (zum Beispiel Basiseinheit 11) an starren Lagerpunkten (zum Beispiel die Achsen 18a, 18b aufweisend) drehbar gelagert. Die Lagerungen können spielfreie Präzisionslager umfassen. Die Befestigungspunkte der Gelenkarme (beziehungsweise Haltearme) können so gewählt sein, dass auf die Motor-Getriebeeinheit (z.B. bei Nicht-Aktivieren) nur ein kleines Moment wirkt. Das Moment, das von der Motor-Getriebeeinheit aufzubringen ist, wird durch eine günstige Kraftteilung minimiert. Die Gelenkarme (beziehungsweise Haltearme) können das Gewicht des Goniometers im Wesentlichen tragen.

An dem Schlitten 23 ist zum Beispiel eine Linearführungseinheit (die Elemente 21, 22 aufweisend zum Beispiel), die nur eine Bewegung in einer Richtung (zum Beispiel 20) ermöglicht. Die Linearführung kann mittig oder auch links oder rechts zur Motor-Getriebeeinheit angeordnet sein. Die Linearführungseinheit mit den Gelenkarmen (zum Beispiel Haltearme) und die im Schlitten durch das Lager drehbar gelagerte Motor-Getriebeeinheit ermöglichen nur eine symmetrische Winkelbewegung der Goniometerarme, das heißt eine gegensinnige Bewegung um jeweils ein gleiches Winkelinkrement.

Bei Aktivierung der Rotationsantriebseinheit kann folgender Bewegungsablauf erfolgen: Der an das Getriebegehäuse angeflanschte Motor treibt das Getriebe an. Das Getriebe kann eine sehr hohe Untersetzung haben, vorzugsweise größer/gleich 100:1 (100 Umdrehungen an der Abtriebswelle des Motors ergeben eine Umdrehung an der Abtriebswelle des Getriebes), um die Winkelauflösung zu gewährleisten. Zusätzlich erhöht sich das Abtriebsdrehmoment an der Abtriebswelle des Getriebes um den Faktor der Untersetzung.

Da ein Goniometerarm an der Abtriebswelle des Getriebes und ein anderer Goniometerarm am Gehäuse des Getriebes befestigt ist, wird eine Winkelbewegung der Goniometerarme zueinander erzeugt, das heißt eine gegensinnige synchrone Winkelbewegung. Die Motor-Getriebeeinheit ist in einem Schlitten drehbar und spielfrei gelagert. Da der Schlitten sich nur linear entlang der Bewegungsrichtung (zum Beispiel Richtung 20) der Linearführungseinheit bewegen kann, und die Goniometerarme durch die Gelenkarme (zum Beispiel Haltearme) symmetrisch befestigt sind, können sich die Goniometerarme nur gleichzeitig und symmetrisch bewegen. Eine Veränderung des Winkels der Goniometerarme bewirkt ein Verschieben der Motor-Getriebeeinheit entlang der Linearführungseinheit.

Wellgetriebe (Harmonic-Drive-Getriebe) gehören zu den Getrieben mit höchster Präzision, die es derart am Markt verfügbar gibt. Aus diesem Grund wird vorzugsweise eine Kombination aus Wellgetriebe und einer direkt an die Antriebswelle des Getriebes befestigten Abtriebswelle eines Motors für das Goniometer eingesetzt.

Figur 7 illustriert ein Wellgetriebe 30, dass in einem Goniometer, insbesondere der Rotationsantriebseinheit 13, gemäß einer Ausführungsform der vorliegenden Erfindung verwendet werden kann. Der innenverzahnte steife Ring 31 (Circularspline) ist mit dem Gehäuse fest verbunden. Der Wave Generator 33 kann von einem Elektromotor angetrieben werden. Die außenverzahnte flexible Hülse 32 (Flexspline) rotiert langsam bei Antrieb über den Wave Generator 33 und ist mit der Abtriebswelle des Wellgetriebe 30 verbunden.

Elemente oder Strukturen in den Zeichnungen, welche in ihrer Struktur und/oder Funktion ähnlich sind, sind in den verschiedenen Figuren mit Bezugszeichen bezeichnet, welche sich lediglich in der ersten Ziffer unterscheiden. Die Beschreibung eines Elementes, welches im Zusammenhang mit einer Ausführungsform nicht im Detail beschrieben ist, kann einer Beschreibung dieses entsprechenden Elementes in einer anderen Ausführungsform entnommen werden.

Außerdem wird darauf hingewiesen, dass raumbezogene Begriffe, wie beispielsweise "vorne" und "hinten", "oben" und "unten", "links" und "rechts", etc. verwendet werden, um die Beziehung eines Elements zu einem anderen Element oder zu anderen Elementen zu beschreiben, wie in den Figuren veranschaulicht. Demnach können die raumbezogenen Begriffe für Ausrichtungen gelten, welche sich von den Ausrichtungen unterscheiden, die in den Figuren dargestellt sind. Alle solche raumbezogenen Begriffe beziehen sich der Einfachheit der Beschreibung halber auf die in den Zeichnungen dargestellten Ausrichtungen und sind nicht unbedingt einschränkend, da die jeweils dargestellte Vorrichtung, Komponente etc., wenn sie in Verwendung ist, Ausrichtungen annehmen kann, die von den in der Zeichnung dargestellten Ausrichtungen verschieden sein können.

Es wird angemerkt, dass der Begriff "aufweisen" nicht andere Elemente ausschließt und dass das "ein" nicht eine Mehrzahl ausschließt. Auch können Elemente, die in Zusammenhang mit unterschiedlichen Ausführungsbeispielen beschrieben sind, kombiniert werden. Es sollte auch angemerkt werden, dass Bezugszeichen in den Ansprüchen nicht als den Schutzbereich der Ansprüche beschränkend ausgelegt werden sollen.

## Patentansprüche

1. Goniometer (2) für eine Messapparatur (1), insbesondere Röntgenstreumessapparatur, aufweisend:
eine Basiseinheit (11);
einen ersten Goniometerarm (12a) und einen zweiten Goniometerarm (12b);
eine Rotationsantriebseinheit (13), die ein Gehäuse (14) und eine Abtriebswelle (15) mit Abtriebswellenachse (9) aufweist, wobei das Gehäuse (14) der Rotationsantriebseinheit (13) um eine Rotationsantriebseinheitslagerachse (10), die im Wesentlichen parallel und insbesondere im Wesentlichen entlang der Abtriebswellenachse (9) ausgerichtet ist, drehbar relativ zu der Basiseinheit (11) gelagert ist;
wobei der erste Goniometerarm (12a) an dem Gehäuse (14) der Rotationsantriebseinheit (13) befestigt ist, wobei durch Aktivieren der Rotationsantriebseinheit (13) der erste Goniometerarm (12a) um die Rotationsantriebseinheitslagerachse (10) verdreht wird,
wobei der zweite Goniometerarm (12a) an der Abtriebswelle (15) der Rotationsantriebseinheit (13) befestigt ist, wobei durch Aktivieren der Rotationsantriebseinheit (13) der zweite Goniometerarm (12b) um die Abtriebswellenachse (9) und/oder die Rotationsantriebseinheitslagerachse (10) verdreht wird.

2. Goniometer gemäß dem vorangehenden Anspruch,
wobei durch Aktivieren der Rotationsantriebseinheit (13) der erste Goniometerarm (12a) relativ zur Basiseinheit um einen ersten Winkel (a) verdreht wird,
wobei durch Aktivieren der Rotationsantriebseinheit (13) der zweite Goniometerarm (12b) relativ zur Basiseinheit (11) um einen zweiten Winkel (-a) verdreht wird, der das Negative des ersten Winkels beträgt,
wobei insbesondere bei Verdrehen der Abtriebswelle (15) der Rotationsantriebseinheit um ein erstes Winkelinkrement eine gegensinnige Verdrehung des ersten Goniometerarms und des zweiten Goniometerarms um ein zweites Winkelinkrement erfolgt, das der Größe nach proportional zum, insbesondere die Hälfte des, ersten Winkelinkrement ist, wobei ferner insbesondere ein Proportionalitätsfaktor über einen gesamten erstellbaren Verdrehungsbereich des ersten und zweiten Goniometerarms konstant ist.

3. Goniometer gemäß einem der vorangehenden Ansprüche, ferner aufweisend:
einen ersten Haltearm (16a), der bei einem Basisverbindungbereich (17a) um eine erste Haltearmlagerachse (18a) drehbar relativ zu der Basiseinheit (11) gelagert ist und bei einem Goniometerarmverbindungsbereich (19a) um eine Drehhalteachse (20a) des ersten Goniometerarms (12a) drehbar an dem ersten Goniometerarm (12a) gelagert ist;
einen zweiten Haltearm (16b), der bei einem Basisverbindungbereich (17b) um eine zweite Haltearmlagerachse (18b), insbesondere parallel zur ersten Haltearmlagerachse, drehbar relativ zu der Basiseinheit (11) gelagert ist und bei einem Goniometerarmverbindungsbereich (19b) um eine Drehhalteachse (20b) des zweiten Goniometerarms (12b), insbesondere parallel zur Drehhalteachse des ersten Goniometerarms, drehbar an dem zweiten Goniometerarm gelagert ist.

4. Goniometer gemäß dem vorangehenden Anspruch,
wobei die Rotationsantriebseinheit (13) in einer Richtung (20) geradlinig verschiebbar relativ zu der Basiseinheit (11) gelagert ist,
wobei bei Aktivieren der Rotationsantriebseinheit (13) eine Ausrichtung der Abtriebswellenachse (9) als auch der Rotationsantriebseinheitslagerachse (10) unverändert bleibt, und/oder
wobei bei Aktivieren der Rotationsantriebseinheit eine Verschiebung der Position der Abtriebswellenachse (9) als auch der Position der Rotationsantriebseinheitslagerachse (10) senkrecht zur Abtriebswellenachse und/oder zur Rotationsantriebseinheitslagerachse relativ zur Basiseinheit erfolgt,
wobei bei Aktivieren der Rotationsantriebseinheit (13) eine Ausrichtung und eine Lage sowohl der ersten Haltearmlagerachse (18a) als auch der zweiten Haltearmlagerachse (18b) insbesondere unverändert bleiben.

5. Goniometer gemäß einem der vorangehenden Ansprüche 3 oder 4, ferner aufweisend:
eine an der Basiseinheit (11) vorgesehene Linearführungsbahn (21, 22);
einen Schlitten (23), der entlang der Linearführungsbahn verschiebbar ist, wobei die Rotationsantriebseinheit (13) auf dem Schlitten (23) relativ zum Schlitten um die Rotationsantriebseinheitslagerachse (10) drehbar gelagert ist.

6. Goniometer gemäß einem der Ansprüch 3 bis 5,
wobei bei Aktivieren der Rotationsantriebseinheit eine Ausrichtung sowohl der ersten Haltearmlagerachse (18a) als auch der zweiten Haltearmlagerachse (18b) unverändert bleibt,
wobei bei Aktivieren der Rotationsantriebseinheit eine geradlinige Verschiebung der Lage sowohl der ersten Haltearmlagerachse (18a) als auch der zweiten Haltearmlagerachse (18b) erfolgt,
wobei das Goniometer insbesondere ferner aufweist:
einen ersten (24a) und einen zweiten (24b) an der Basiseinheit (11) vorgesehenen Linearführungsbahnabschnitt;
einen ersten (25a) und einen zweiten Schlittenabschnitt (25b), die entlang der Linearführungsbahnabschnitte verschiebbar sind,
wobei der erste Haltearm (16a) auf dem ersten Schlittenabschnitt (25a) relativ zum ersten Schlittenabschnitt um die erste Haltearmlagerachse (18a) drehbar gelagert ist, und/oder
wobei der zweite Haltearm (16b) auf dem zweiten Schlittenabschnitt (25a) relativ zum zweiten Schlittenabschnitt um die zweite Haltearmlagerachse (18b) drehbar gelagert ist.

7. Goniometer gemäß einem der vorangehenden Ansprüche 3 bis 6,
wobei bei Aktivieren der Rotationsantriebseinheit (23) eine Ausrichtung sowohl der Drehhalteachse (20a) des ersten Goniometerarms als auch der Drehhalteachse (20b) des zweiten Goniometerarms unverändert bleiben; und/oder
wobei bei Aktivieren der Rotationsantriebseinheit (23) eine Verschiebung der Position sowohl der Drehhalteachse (20a) des ersten Goniometerarms als auch der Drehhalteachse (20b) des zweiten Goniometerarms senkrecht zur jeweiligen Drehhalteachse erfolgt.

8. Goniometer gemäß einem der vorangehenden Ansprüche 3 bis 7,
wobei die erste Haltearmlagerachse (18a) spiegelsymmetrisch zu der zweiten Haltearmlagerachse (18b) angeordnet ist, und/oder
wobei die Drehhalteachse (20a) des ersten Goniometerarms spiegelsymmetrisch zu der Drehhalteachse (20b) des zweiten Goniometerarms angeordnet ist,
wobei eine Spiegelebene (26) durch die Rotationsantriebseinheitslagerachse (10) und/oder die Abtriebswellenachse (9) verläuft und senkrecht zu einer Ebene (27) ausgerichtet ist, die sowohl durch die erste Haltearmlagerachse (18a) als auch durch die zweite Haltearmlagerachse (18b) verläuft.

9. Goniometer gemäß einem der vorangehenden Ansprüche 3 bis 8,
wobei ein Abstand (da) zwischen der ersten Haltearmlagerachse und der Drehhalteachse des ersten Goniometerarms im Wesentlichen gleich einem Abstand (db) zwischen der zweiten Haltearmlagerachse und der Drehhalteachse des zweiten Goniometerarms ist und/oder
wobei ein Abstand (dda) zwischen der Rotationsantriebseinheitslagerachse und der Drehhalteachse des ersten Goniometerarms im Wesentlichen gleich einem Abstand (ddb) zwischen der Abtriebswellenachse und der Drehhalteachse des zweiten Goniometerarms ist.

10. Goniometer gemäß einem der vorangehenden Ansprüche, wobei die Rotationsantriebseinheit (13) aufweist:
einen Elektromotor, insbesondere Schrittmotor, mit einer Motorabtriebswelle;
ein Getriebe mit einer Getriebeantriebswelle, die mit der Motorabtriebswelle gekoppelt ist, und mit einer Getriebeabtriebswelle, die die Abtriebswelle der Rotationsantriebseinheit bildet,
wobei ein Übersetzungsverhältnis von Getriebeantriebswelle zu Getriebeabtriebswelle insbesondere zwischen 20:1 und 200:1 beträgt,
wobei das Getriebe insbesondere ein Wellgetriebe aufweist.

11. Goniometer gemäß einem der vorangehenden Ansprüche 3 bis 10, derart ausrichtbar oder ausgerichtet, dass für alle Winkelstellungen:
die erste Haltearmlagerachse oberhalb der Drehhalteachse des ersten Goniometerarms angeordnet ist, und/oder
die zweite Haltearmlagerachse oberhalb der Drehhalteachse des zweiten Goniometerarms angeordnet ist, und/oder
die erste Haltearmlagerachse und/oder die die zweite Haltearmlagerachse im Wesentlichen auf einem gleichen Horizontalniveau angeordnet sind, und/oder
die Drehhalteachse des ersten Goniometerarms und die Drehhalteachse
des zweiten Goniometerarms im Wesentlichen auf einem gleichen
Horizontalniveau angeordnet sind,
wobei insbesondere eine Genauigkeit eines eingestellten Winkels kleiner als 0,05°, insbesondere kleiner als 0,01° ist.

12. Goniometer gemäß einem der vorangehenden Ansprüche 3 bis 11,
wobei die Haltearme (16a, 16b) ein Gewicht der Goniometerarme derart tragen, dass ein auf die Rotationsantriebseinheit wirkendes Drehmoment zum Halten eines eingestellten Winkels zwischen erstem und zweitem Goniometerarm kleiner als ein Schwellwert ist, der insbesondere zwischen 0.5 Nm und 20 Nm liegt, und/oder
wobei eine Ausdehnung von Komponenten des Goniometers, insbesondere als Folge von Temperaturänderung um zwischen 15 °C und 40 °C, höchstens zu einer Änderung eines eingestellten Winkels zwischen erstem und zweitem Goniometerarm, führt, der aufgrund der Geometrie der Rotationsantriebseinheit kleiner ist als 0,1°, insbesondere kleiner als 0,05°.

13. Messapparatur (1) zum Vermessen einer Probe (6), insbesondere Röntgenstreumessapparatur, aufweisend:
ein Goniometer (2) gemäß einem der vorangehenden Ansprüche;
eine Strahlungsquelle (3) zum Erzeugen von Messstrahlung (4);
einen Strahlungsdetektor (5) zum Detektieren von von der Probe ausgehender sekundärer Strahlung (7);
einen Probenhalter (8), der angeordnet und ausgebildet ist, eine Probe (6) im Wesentlichen in einem Bereich bei der Abtriebswellenachse (9) und/oder der Rotationsantriebseinheitslagerachse (10) zu haltern, insbesondere an Schlitten (23) und/oder zusammen mit Rotationsantriebseinheit (13) verschiebbar montiert,
wobei an einem des ersten oder zweiten Goniometerarms die Strahlungsquelle angebracht ist und an einem anderen des ersten oder zweiten Goniometerarms der Strahlungsdetektor angebracht ist, derart, dass
die Messstrahlung auf die Probe trifft und die sekundäre Strahlung zumindest teilweise vom Strahlungsdetektor detektiert wird.

14. Messapparatur gemäß dem vorangehenden Anspruch, ferner aufweisend:
eine Treiberschaltung und/oder Steuer- und/oder Auswerteeinheit (28), ausgebildet und verbunden, um Steuersignale (29) an die Rotationsantriebseinheit (13) zu übermitteln, um die Rotationsantriebseinheit zu aktivieren, sodass gegensinnige Verschwenkungen um oder auf einen vorbestimmten Winkel von dem ersten und dem zeiten Goniometerarm durchgeführt werden.

15. Verfahren eines Herstellens eines Goniometers (2) für eine Messapparatur (1), insbesondere Röntgenstreumessapparatur, aufweisend:
Bereitstellen einer Basiseinheit (11), eines ersten Goniometerarms (12a) und eines zweiten Goniometerarms (12b) sowie einer Rotationsantriebseinheit (13), die ein Gehäuse (14) und eine Abtriebswelle (15) mit Abtriebswellenachse (9) aufweist,
Lagern des Gehäuses (14) der Rotationsantriebseinheit um eine Rotationsantriebseinheitslagerachse (9) drehbar relativ zu der Basiseinheit (11);
Befestigen des ersten Goniometerarms (12a) an dem Gehäuse (14) der Rotationsantriebseinheit (13), wobei durch Aktivieren der Rotationsantriebseinheit (13) der erste Goniometerarm um die Rotationsantriebseinheitslagerachse (10) verdreht wird,
Befestigen des zweiten Goniometerarms (12b) an der Abtriebswelle (15) der Rotationsantriebseinheit, wobei durch Aktivieren der Rotationsantriebseinheit der zweite Goniometerarm (12b) um die Abtriebswellenachse (9) und/oder die Rotationsantriebseinheitslagerachse (10) verdreht wird.
